# EUROPÄISCHE PATENTANMELDUNG

(11) **EP 1 847 745 A2**
(43) Veröffentlichungstag der Anmeldung: **24.10.2007**
(21) Anmeldenummer: 07001819.7
(22) Anmeldetag: 27.01.2007
(51) Int. Cl.: F16L 3/01, F16L 3/22

(54) **Leitungsverbund**

(30) Priorität: 21.04.2006 DE 102006019133
(71) Anmelder: ekd gelenkrohr GmbH, 40699 Erkrath (DE)
(72) Erfinder: Klein, Ernst, 40625 Düsseldorf (DE)
(74) Vertreter: Albrecht, Rainer Harald

(57) **Zusammenfassung**

Die Erfindung betrifft einen Leitungsverbund aus mindestens zwei parallelen, flexiblen Leitungen (1), die einen orts- oder maschinenfesten Anschluss mit einem beweglichen Maschinenteil verbinden. Zum Leitungsverbund gehört ein Verbindungselement zwischen benachbarten Leitungen. Das Verbindungselement besteht erfindungsgemäß aus einer Gleitschiene (2), an der die Leitungen in Leitungslängsrichtung schiebebeweglich gehalten sind.

## Beschreibung

Die Erfindung betrifft einen Leitungsverbund aus mindestens zwei parallelen, flexiblen Leitungen, die einen orts- oder maschinenfesten Anschluss mit einem beweglichen Maschinenteil verbinden. Der Begriff "Leitungen" umfasst im Rahmen der Erfindung sowohl biegsame Schutzrohre zur Aufnahme Energie führender Leitungen als auch Kabel und Schläuche aller Art. Unter den Begriff sollen insbesondere auch ein- oder mehradrige elektrische Leitungen, Fluidleitungen, Lichtleiterkabel, Koaxialkabel und dergleichen fallen.

Aus DE-U 295 02 257 ist ein gewebter Leitungsverbund bekannt, in den nebeneinander liegende Leitungen integriert sind. Der bekannte Leitungsverbund ist für eine ortsfeste Verlegung von elektrischen Leitungen bestimmt und weist eine für die Verlegung vorteilhafte hohe Biegewechselverträglichkeit und gute Verformbarkeit auf, da kein kontinuierlicher Materialfluss zwischen den Adern bzw. Leitungen besteht und sich benachbarte Leitungen im Gewebe frei gegeneinander verschieben können. Für Leitungen, die beispielsweise an einem Roboterarm oder einer Maschine einen orts- oder maschinenfesten Anschluss mit einem beweglichen Anschluss verbinden, ist der Leitungsverbund nicht geeignet, denn er weist keine ausreichende Stabilität auf, um die parallel nebeneinander verlegten Leitungen in der gewünschten Ordnung zu halten. Es besteht die Gefahr, dass die parallel verlegten Leitungen sich beim Betrieb unkontrolliert gegeneinander verdrehen.

In US 3 160 175 und US 6 061 880 werden unterschiedliche Befestigungselemente beschrieben, um Leitungen zu fixieren und relativ zueinander im Abstand zu halten. Auch diese Befestigungselemente sind ausschließlich für eine ortsfeste Verlegung von Leitungen bestimmt.

Der Stand der Technik sieht für Leitungen, die an Roboterarmen angeschlossen werden müssen, Energieführungsketten aus mehraxial schwenkbaren Kettengliedern vor. Energieführungsketten, die mehrachsige Bewegungen zulassen, sind in der Fertigung aufwändig und teuer. Häufig erzielt man mit solchen Energieführungsketten auch nicht den gewünschten Effekt, einerseits die Leitungen in bestimmten Bereichen richtungsstabil zu führen und gleichzeitig in anderen Bereichen die hier erforderliche Flexibilität zu gewährleisten. Ferner besteht bei diesen Ketten keine Möglichkeit, nach Ausschöpfung des vorhandenen Kettenquerschnitts zusätzlich vorhandene Leitungen aufzunehmen.

Der Erfindung liegt die Aufgabe zu Grunde, einen Leitungsverbund aus parallel nebeneinander angeordneten flexiblen Leitungen anzugeben, der mehrachsige Bewegungen um alle drei Raumachsen zulässt, aber eine Verdrehung oder Verdrallung einzelner Leitungen des Verbundes um deren Längsachse sicher verhindert. Der Leitungsverbund soll den Bewegungen eines Maschinenteils folgen können und dabei stets eine parallele Ausrichtung der Leitungen gewährleisten. Des Weiteren soll der Leitungsverbund auch nachträglich noch durch Zufügen weiterer Leitungen erweiterbar sein.

Gegenstand der Erfindung und Lösung der Aufgabe ist ein Leitungsverbund aus mindestens zwei parallelen, flexiblen Leitungen, die einen orts- oder maschinenfesten Anschluss mit einem beweglichen Maschinenteil verbinden, und einem Verbindungselement zwischen benachbarten Leitungen, wobei das Verbindungselement aus einer Gleitschiene besteht, an der die Leitungen in Leitungslängsrichtung schiebebeweglich gehalten sind. Vorzugsweise ist die Gleitschiene als biegsame Kunststoff-Profilleiste ausgebildet, die zwar eine ausreichende Torsionssteifigkeit aufweist, um die Leitungen richtungsstabil in einem geordneten Verbund zu halten, aber in Bögen verlegbar ist und mehrachsigen Bewegungen eines beweglichen Maschinenteils folgen kann. Die Gleitschiene kann als Rollenware verarbeitet werden, was die Montage des Leitungsverbundes erleichtert. Bei Verwendung der Gleitschiene kann ein Leitungsverbund aus einer Vielzahl paralleler Leitungen hergestellt und durch Anschluss weiterer Leitungen nachträglich noch erweitert werden.

Die Gleitschiene stellt den Verbund zwischen den Leitungen her und lässt nur axiale Relativbewegungen zwischen benachbarten Leitungen zu. Der erfindungsgemäße Verbund gleicht einem mehradrigen Flachkabel, bei dem jedoch die einzelnen Adern bzw. Leitungen in Leitungsrichtung jeweils gegeneinander ausschließlich in axialer Richtung verschiebbar sind.

Die Gleitschiene weist vorzugsweise ein H-förmiges Querschnittsprofil mit einem Querschnitt und endseitigen Flanken auf, wobei an der Oberseite und der Unterseite des Querstegs Rippen angeformt sind, die den Raum zwischen den Flanken in Kammern unterteilen. Die Kammern bilden Nuten, entlang denen die Leitungen geführt sind. Die Innenfläche der Flanken ist zweckmäßig konvex gekrümmt.

Zur Befestigung der Leitungen an der Gleitschiene ergeben sich eine Vielzahl von konstruktiven Möglichkeiten, deren Auswahl unter anderem abhängig ist von der Art der Leitung. Wenn die anzuschließende flexible Leitung aus einem biegsamen Schutzrohr besteht, kann ein in Leitungslängsrichtung geschlitztes Schutzrohr verwendet werden, wobei die Gleitschiene in den Längsschlitz der Leitung eingreift. Die Leitung ist bei dieser Ausführung unmittelbar mit der Gleitschiene verbunden. Es versteht sich, dass die als Gleitflächen dienenden Kontaktflächen der Gleitschiene an die Geometrie der anzuschließenden Leitung angepasst sind.

Die Leitungen können ferner unter Verwendung von Aufsteckteilen, die vorzugsweise als Clipse ausgeführt sind, mit der Gleitschiene verbunden werden. Die Aufsteckteile weisen einen als Gleitschuh ausgebildeten Anschlussbereich für die Gleitschiene auf. Bevorzugte konstruktive Ausführungen sind in den Ansprüchen 6 bis 10 beschrieben und werden im Folgenden anhand von Ausführungsbeispielen erläutert. Unter Verwendung von Aufsteckteilen können beliebige Leitungen, insbesondere auch Kunststoff ummantelte elektrische Leitungen, Fluidleitungen und dergleichen ohne Schutzrohre in den Verbund integriert werden. Mit den erfindungsgemäßen Gleitschienen und Aufsteckteilen, die in Abständen auf den Leitungen befestigt werden, kann ein Leitungsverbund aus einer Mehrzahl parallel angeordneter Leitungen hergestellt werden, der nachträglich jederzeit durch Anschluss weiterer Leitungen erweiterbar ist.

Im Folgenden wird die Erfindung anhand von Ausführungsbeispielen erläutert. Es zeigen schematisch:
- Fig. 1: einen Leitungsverbund aus mehreren parallelen Leitungen in einer perspektivischen Darstellung,
- Fig. 2: einen Ausschnitt aus einem erfindungsgemäßen Leitungsverbund in der Draufsicht,
- Fig. 3: einen Querschnitt durch den in Fig. 2 dargestellten Leitungsverbund,
- Fig. 4: eine im Leitungsverbund verwendete Gleitschiene im Querschnitt in einer im Vergleich zu den Fig. 1 bis 3 vergrößerten Darstellung,
- Fig. 5a und 5b: eine weitere Ausgestaltung des erfindungsgemäßen Leitungsverbundes in der Draufsicht und im Querschnitt,
- Fig. 6a und 6b: eine dritte Ausgestaltung des erfindungsgemäßen Leitungsverbundes ebenfalls in der Draufsicht und im Querschnitt.
- Fig. 7a und 7b: Aufsteckteile für den erfindungsgemäßen Leitungsverbund.

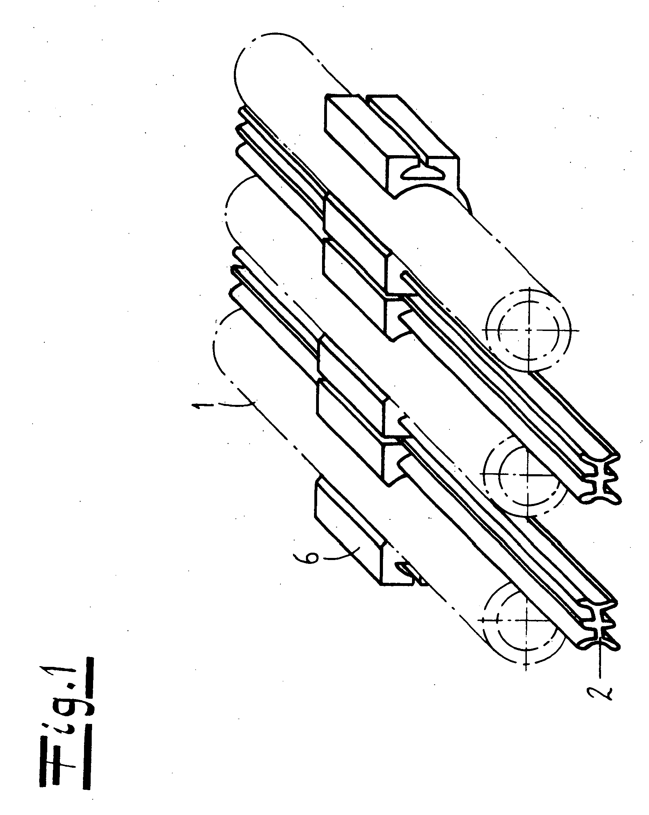

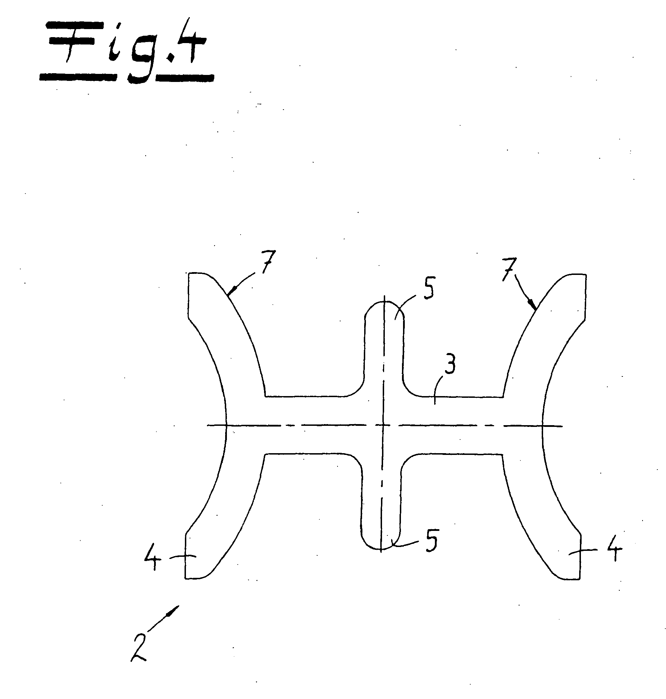

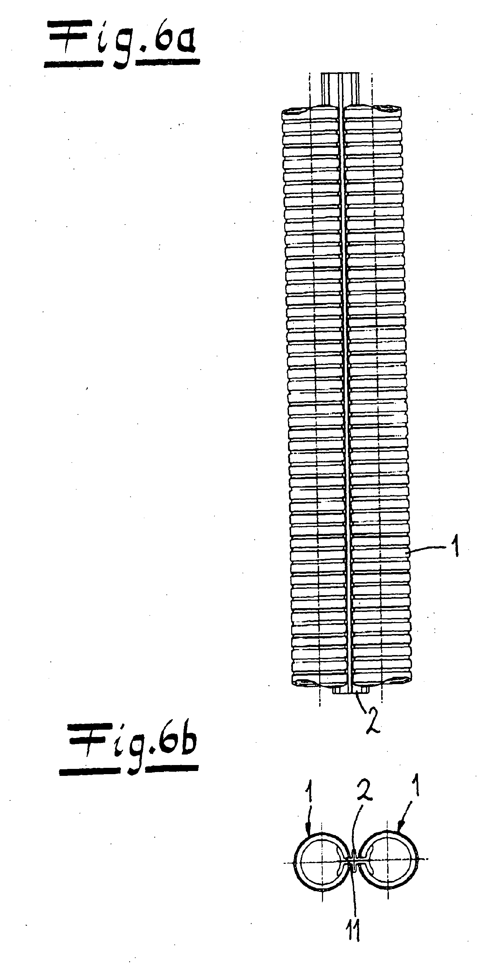

Der in Figur 1 dargestellte Leitungsverbund weist mehrere parallele, flexible Leitungen 1 auf. Unter den Begriff "Leitungen" sollen biegsame Schutzrohre sowie Kabel und Schläuche aller Art fallen. Die Leitungen 1 können sich im Verbund axial zueinander verschieben. Der Leitungsverbund kann dadurch unter Beibehaltung einer vorgegebenen Richtungsstabilität nahezu beliebige Bewegungen im Raum vollziehen und gewährleistet eine geordnete, verdrallfreie Führung der Leitungen 1. Der Leitungsverbund ist zur Verlegung von Leitungen 1 bestimmt, die einen orts- oder maschinenfesten Anschluss mit einem beweglichen Maschinenteil verbinden. Insbesondere ist der Leitungsverbund auch für die Parallelführung von Leitungen an mehrachsigen Maschinen und Roboterarmen geeignet. Zur Verbindung der flexiblen Leitungen 1 werden biegsame Gleitschienen 2 verwendet, an denen die Leitungen 1 in Leitungslängsrichtung schiebebeweglich gehalten sind. Die Gleitschienen 2 bestehen aus Kunststoff-Profilleisten, deren Querschnitt in Figur 4 vergrößert dargestellt ist. Sie weisen ein H-förmiges Querschnittsprofil mit einem Quersteg 3 und endseitigen Flanken 4 auf. An der Oberseite und der Unterseite des Querstegs 3 sind Rippen 5 angeformt, die den Raum zwischen den Flanken 4 in Kammern unterteilen. Die Kammern bilden Nuten, an denen die Leitungen 1 unmittelbar oder unter Verwendung von clipsförmigen Aufsteckteilen 6, 6' mittelbar formschlüssig gehalten und schiebebeweglich geführt sind. Die Innenfläche 7 der Flanken 4 ist konvex gekrümmt. Die konvexe Krümmung ist insbesondere dann von Bedeutung, wenn die Leitungen 1 entsprechend dem in den Figuren 6a und 6b dargestellten Ausführungsbeispiel unmittelbar an der Gleitschiene 2 befestigt sind.

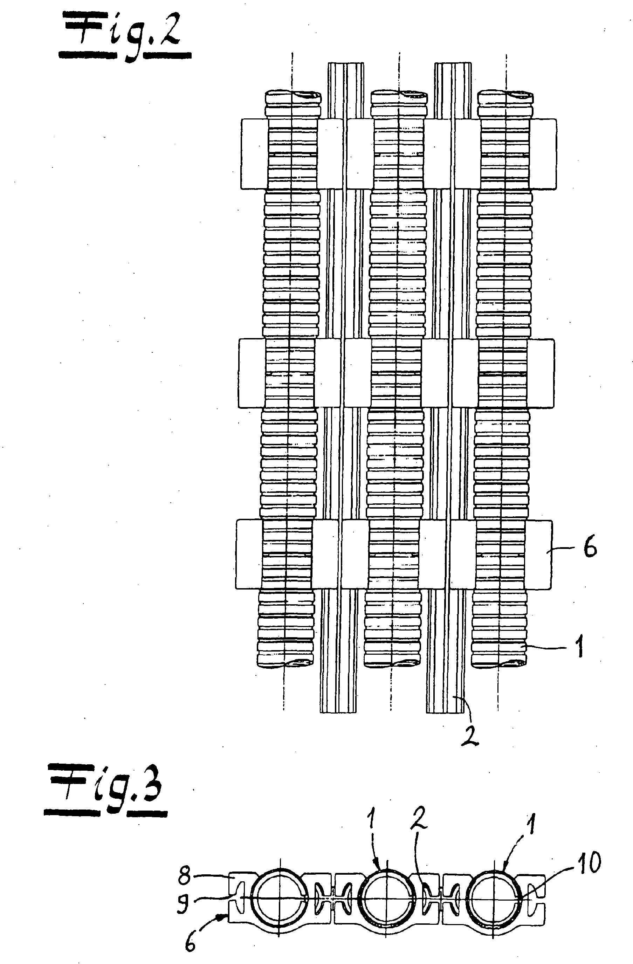

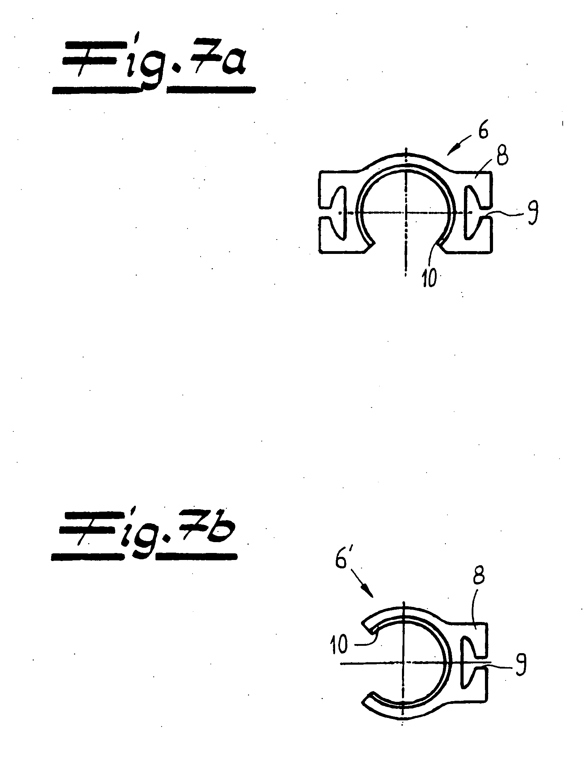

In dem in den Figuren 2 und 3 dargestellten Ausführungsbeispiel sind auf den flexiblen Leitungen 1 clipsförmige Aufsteckteile 6 befestigt, die von oben auf die Leitungen 1 aufsteckbar sind und an beiden Längsseiten jeweils einen als Gleitschuh 8 ausgebildeten Anschlussbereich für die Gleitschiene 2 aufweisen. Im Anschlussbereich ist eine im Querschnitt etwa T-förmige Nut 9 zur Aufnahme einer Flanke 4 der Gleitschiene 2 vorgesehen. Das die Leitungen 1 umgreifende Maul der Aufsteckteile 6 ist mit mindestens einer Rippe 10 (Fig. 7a) versehen, welche das Aufsteckteil auf der Leitung axial fixiert. Im Ausführungsbeispiel handelt es sich bei den Leitungen 1 um biegsame Schutzrohrleitungen in Form von Wellrohren, wobei die Rippen 10 der Aufsteckteile 6 in Vertiefungen der Wellrohre eingreifen. Die in den Figuren 2 und 3 dargestellte Anordnung ist jedoch auch für Kunststoff ummantelte elektrische Leitungen, Fluidleitungen und dergleichen geeignet, die ohne Schutzrohr im Leitungsverbund integriert werden können. Bei entsprechender Vorspannung der Clipse können die Clipse auch auf glatten Leitungsoberflächen sicher gehalten werden. Die Aufsteckteile können bei Bedarf jedoch auch als Schellen mit Spannschrauben ausgebildet werden.

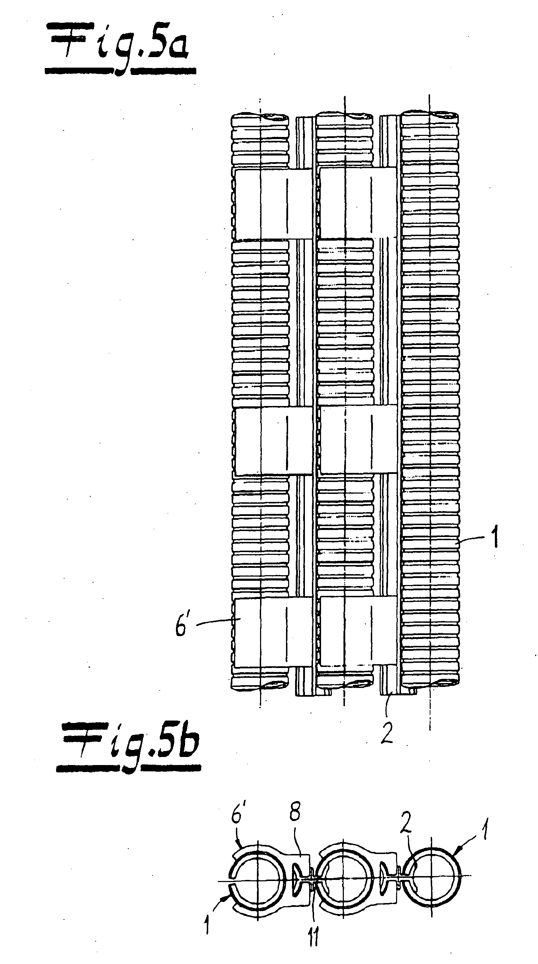

In dem in den Figuren 5a und 5b dargestellten Ausführungsbeispiel handelt es sich bei den Leitungen 1 um Wellrohre, die in Leitungslängsrichtung geschlitzt sind. Die Gleitschienen 2 zwischen benachbarten Leitungen greifen an ihrer einen Seite in den Längsschlitz 11 der Wellrohre ein. Die andere Seite der Gleitschiene 2 wirkt mit clipsförmigen Aufsteckteilen 6' zusammen, die seitlich auf eine Leitung aufgesteckt sind und einen als Gleitschuh 8 ausgebildeten Anschlussbereich für die Gleitschiene 2 aufweisen. Der Anschlussbereich der Aufsteckteile 6' enthält eine im Querschnitt T-förmige Nut 9 zur Aufnahme einer Flanke 4 der Gleitschiene 2. Das die Leitung 1 umgreifende Maul der clipsförmigen Aufsteckteile 6' ist ebenfalls mit mindestens einer Rippe 10 versehen, welches den Clips auf der Leitung axial fixiert (Fig. 7b). Bei der in den Figuren 5a und 5b dargestellten Anordnung kann eine beliebige Zahl von biegsamen geschlitzten Wellrohren nebeneinander im Verbund angeordnet werden.

Die in den Figuren 6a und 6b dargestellte Anordnung erlaubt die schiebebewegliche Verbindung von zwei biegsamen Schutzrohren, die in Leitungslängsrichtung geschlitzt sind. Die Gleitschiene 2 greift an beiden Längsseiten in den Längsschlitz 11 der Leitungen 1 ein. Die Leitungen 1 wirken unmittelbar mit der Gleitschiene 2 zusammen. Für die schiebebewegliche Verbindung der Leitungen 1 sind keine clipsförmigen Aufsteckteile notwendig. Die Flanken 4 der Gleitschiene 2 sind an ihrer Innenfläche konvex gekrümmt, wobei die Krümmung an den Krümmungsradius der Leitungen angepasst ist.

## Patentansprüche

1. Leitungsverbund aus mindestens zwei parallelen, flexiblen Leitungen, die einen orts- oder maschinenfesten Anschluss mit einem beweglichen Maschinenteil verbinden, und einem Verbindungselement zwischen benachbarten Leitungen, wobei das Verbindungselement aus einer Gleitschiene (2) besteht, an der die Leitungen (1) in Leitungslängsrichtung schiebebeweglich gehalten sind.

2. Leitungsverbund nach Anspruch 1, **dadurch gekennzeichnet, dass** die Gleitschiene (2) als biegsame Kunststoff-Profilleiste ausgebildet ist.

3. Leitungsverbund nach Anspruch 1 oder 2, **dadurch gekennzeichnet, dass** die Gleitschiene (2) ein H-förmiges Querschnittsprofil mit einem Quersteg (3) und endseitigen Flanken (4) aufweist und dass an der Oberseite und der Unterseite des Querstegs Rippen (5) angeformt sind, die den Raum zwischen den Flanken (4) in Kammern unterteilen.

4. Leitungsverbund nach Anspruch 3, **dadurch gekennzeichnet, dass** die Innenfläche (7) der Flanken (4) konvex gekrümmt ist.

5. Leitungsverbund nach einem der Ansprüche 1 bis 4, **dadurch gekennzeichnet, dass** mindestens eine der flexiblen Leitungen (1) aus einem biegsamen Schutzrohr besteht und in Leitungslängsrichtung geschlitzt ist und dass die Gleitschiene (2) in den Längsschlitz (11) der Leitung (1) eingreift.

6. Leitungsverbund nach einem der Ansprüche 1 bis 5, **dadurch gekennzeichnet, dass** auf mindestens einer der flexiblen Leitungen Aufsteckteile (6') befestigt sind, die seitlich auf die Leitung (1) aufsteckbar sind und einen als Gleitschuh (8) ausgebildeten Anschlussbereich für die Gleitschiene (2) aufweisen.

7. Leitungsverbund nach einem der Ansprüche 1 bis 5, **dadurch gekennzeichnet, dass** auf mindestens einer der flexiblen Leitungen Aufsteckteile (6) befestigt sind, die von oben auf die Leitung (1) aufsteckbar sind und an beiden Längsseiten jeweils einen als Gleitschuh (8) ausgebildeten Anschlussbereich für die Gleitschiene (2) aufweisen.

8. Leitungsverbund nach Anspruch 6 oder 7, **dadurch gekennzeichnet, dass** die Aufsteckteile (6, 6') als Clipse ausgebildet sind.

9. Leitungsverbund nach einem der Ansprüche 6 bis 8, **dadurch gekennzeichnet, dass** die Gleitschuhe (8) eine im Querschnitt T-förmige Nut (9) zur Aufnahme einer Flanke (4) der Gleitschiene (2) aufweisen.

10. Leitungsverbund nach einem der Ansprüche 6 bis 9, **dadurch gekennzeichnet, dass** das die Leitungen umgreifende Maul der Aufsteckteile (6, 6') mit mindestens einer Rippe (10) versehen ist, welche das Aufsteckteil (6, 6') auf der Leitung (1) axial fixiert.
